# EUROPÄISCHE PATENTANMELDUNG

(11) **EP 1 172 674 A2**
(43) Veröffentlichungstag der Anmeldung: **16.01.2002**
(21) Anmeldenummer: 01115518.1
(22) Anmeldetag: 27.06.2001
(51) Int. Cl.: G02B 6/42, G02B 6/26

(54) **Koppelglasfaser zur optischen Kopplung einer Lichtstrahlungsquelle an einem Mehrmoden-Lichtwellenleiter und Verfahren zu deren Herstellung**

(30) Priorität: 10.07.2000 DE 10033485
(71) Anmelder: Infineon Technologies AG, 81669 München (DE)
(72) Erfinder: Kropp, Jörg-Reinhardt, Dr., 12355 Berlin (DE)
(74) Vertreter: Reinhard - Skuhra - Weise & Partner

(57) **Zusammenfassung**

Koppelglasfaser zur optischen Kopplung einer Lichtstrahlungsquelle (6) an einen Mehrmoden-Lichtwellenleiter (7) mit einem Glasfaserkern (2) zur Lichtwellenübertragung, einem den Glasfaserkern (2) umschließenden Glasfasermantel (3), einer Einkopplungsstirnfläche (4) des Glasfaserkerns (2) zum Einkoppeln von Licht, das von der Lichtstrahlungsquelle (6) emittiert wird, in den Glasfaserkern (2), einer Auskopplungsstirnfläche (5) des Glasfaserkerns (2) zum Auskoppeln von Licht aus dem Glasfaserkern (2) in den Mehrmoden-Lichtwellenleiter (7), wobei die Einkopplungsstirnfläche (4) des Glasfaserkerns zur Strahlungswinkelausweitung des eingekoppelten Lichts sphärisch nach innen gekrümmt ist. Verfahren zur Herstellung der Koppelglasfaser. Optoelektronisches Lichtsendebauelement mit einer Lichtstrahlungsquelle und einer Koppelglasfaser.

## Beschreibung

Die Erfindung betrifft eine Koppelglasfaser zur optischen Kopplung einer Lichtstrahlungsquelle an einen Mehrmoden-Lichtwellenleiter und ein Verfahren zu deren Herstellung, die insbesondere bei lichtemittierenden optoelektronischen Bauelementen einsetzbar ist.

In lichtemittierenden optoelektronischen Bauelementen werden zunehmend Laserdioden als Lichtstrahlungsquellen eingesetzt. Derartige Laser strahlen kohärentes Licht mit einer hohen Lichtintensität ab. Bei Licht mit einer derartigen hohen Lichtintensität besteht die Gefahr, dass es bei Einstrahlung des emittierten Laserlichtes auf die Netzhaut eines Auges zu einer Netzhautbeschädigung kommt. Daher müssen optoelektronische Bauelemente, die Laserlichtquellen beinhalten, gewissen Sicherheitsstandards genügen. Bei vorgegebener maximaler Lichtintensität muss der Abstrahlungswinkel erweitert werden, um eine Schädigung der Netzhaut zu vermeiden.

Das von der Laserlichtquelle abgegebene Licht muß bei vielen Anwendungen in eine Glasfaser zur Lichtübertragung eingekoppelt werden. Dabei soll ein möglichst hoher Anteil des von der Laserlichtquelle abgestrahlten Lichtes in den Glasfaserkern eingekoppelt werden.

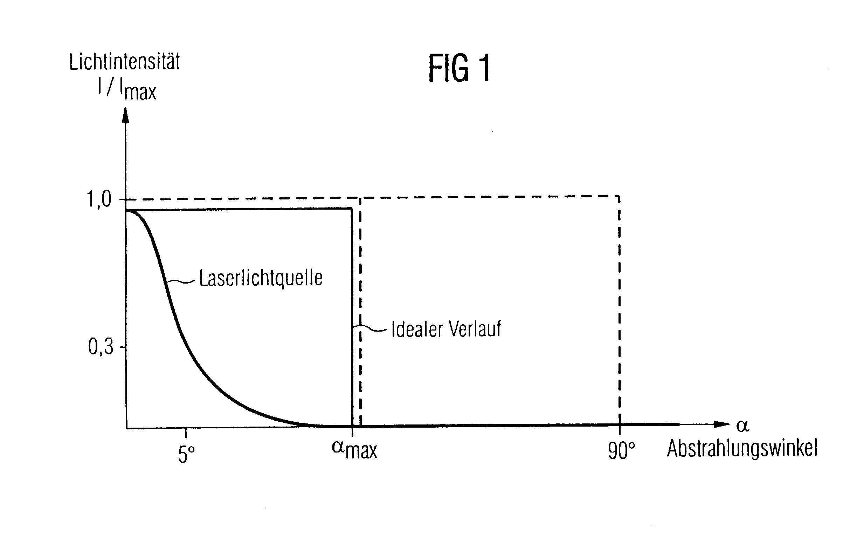

Fig. 1 zeigt den Zusammenhang zwischen der Lichtintensität I und dem Abstrahlungswinkel α der Laserlichtquelle. Die maximale von der Laserlichtquelle abgestrahlte Lichtintensität Iₘₐₓ ist durch die Sicherheitsstandards vorgegeben. Der maximal nutzbare Abstrahlungswinkel αₘₐₓ wird durch die verwendeten optischen Bauelemente insbesondere durch den Akzeptanzwinkel der Glasfaser festgelegt. Eine typische Laserdiode, beispielsweise eine VCSEL-Laserdiode, weist einen relativ geringen Abstrahlungswinkel auf. Fig. 1 zeigt ferner den idealen Verlauf zur Einkopplung abgestrahlten Lichts in den mehrmodigen Lichtwellenleiter. Dieser ideale Verlauf wird durch die maximale Lichtintensität und den maximal nutzbaren Abstrahlungswinkel αₘₐₓ festgelegt. Um eine gute optische Kopplung zwischen der Lichtstrahlungsquelle und dem Mehrmoden-Lichtwellenleiter zu erreichen und andererseits den Sicherheitsstandards zu genügen, ist daher eine optische Kopplungsanordnung zur Anpassung der Lichtquelle an den mehrmodigen Lichtwellenleiter notwendig.

Bei der direkten optischen Kopplung an einen mehrmodigen Lichtwellenleiter wird nur eine teilweise Ausleuchtung des Glasfaserkerns des mehrmodigen Lichtwellenleiters erreicht. Der Grund hierfür ist die relativ geringe Modenanregung aufgrund der geringen Strahlungsapertur der VCSEL-Laserdiode. Bei der direkten Ankopplung einer Laserlichtquelle, beispielsweise einer VCSEL-Laserdiode, ohne Kopplungsanordnung bzw. Abbildungssystem an einen mehrmodigen Lichtwellenleiter mit einem Gradientenindexprofil, wie er beispielsweise für die Datenübertragung verwendet wird, werden in dem mehrmodigen Lichtwellenleiter nur die Moden niedrigster Ordnung angeregt.

Mehrmodige Lichtwellenleiter können ein Gradientenindexprofil aufweisen oder ein stufenförmiges Indexprofil besitzen. Im Gegensatz zu mehrmodigen Lichtwellenleitern werden bei Einmoden-Glasfasern nicht mehrere diskrete Lichtwellen, sondern nur eine Lichtwelle mit einer großen Bandbreite übertragen. Für einmodige Lichtwellenleiter ist die Einkopplung durch Ausformung einer Linse an der Stirnfläche des einmodigen Lichtwellenleiters bekannt. Durch die linsenförmig ausgeformte Stirnfläche des einmodigen Wellenleiters wird bei der direkten Einkopplung des von der Lichtquelle abgegebenen Lichtes in den einmodigen Lichtwellenleiter eine Erhöhung des Anteils des in den Lichtwellenleiter eingekoppelten Lichtes erreicht.

Bei mehrmodigen Lichtwellenleitern wurde zur Erhöhung des optischen Abstrahlungswinkels des eingekoppelten Lichtes eine optische Koppelanordnung vorgeschlagen, bei der die Lichtstrahlungsquelle und die Einkopplungsstirnfläche des mehrmodigen Lichtwellenleiters zueinander derart angeordnet sind, dass die eingekoppelten Lichtstrahlen gegen die geometrische Achse des Lichtwellenleiters in einem Winkel geneigt verlaufen. Eine derartige optische Koppelanordnung führt jedoch nur dann zu einer Aufweitung des Abstrahlungswinkels, wenn es sich bei dem mehrmodigen Lichtwellenleiter um einen Wellenleiter mit Stufenindexprofil handelt.

Demgegenüber weisen kurze Gradientenindex-Wellenleiter die gleichen Eigenschaften wie eine GRIN-Linse (Gradientenindex-Linse) auf, d.h. durch eine gegenüber den Lichtstrahlen schräg verlaufende Einkoppelstirnfläche wird zwar der Winkel der Strahlung in dem Lichtwellenleiter verändert, jedoch nur in eine Richtung. Durch die abbildenden Eigenschaften des Gradientenindex-Lichtwellenleiters wird die Winkelveränderung bei der Übertragung durch den Lichtwellenleiter beibehalten und tritt dann entsprechend der Neigung bzw. Schräglage der Einkoppelstirnfläche schielend aus. Eine Aufweitung des Abstrahlungswinkels erfolgt dabei nicht.

Es ist daher die Aufgabe der vorliegenden Erfindung, eine Koppelglasfaser zur optischen Kopplung einer Lichtstrahlungsquelle an einen mehrmodigen Lichtwellenleiter und ein Verfahren zu dessen Herstellung zu schaffen, bei der ein großer Anteil der von der Laserlichtquelle abgestrahlten Lichtenergie in den Lichtwellenleiter eingekoppelt wird und gleichzeitig den Lasersicherheitsstandards genügt wird.

Diese Aufgabe wird erfindungsgemäß durch eine Koppelglasfaser mit den im Patentanspruch 1 angegebenen Merkmalen gelöst.

Die Erfindung schafft eine Koppelglasfaser zur optischen Kopplung einer Lichtstrahlungsquelle an einen Mehrmoden-Lichtwellenleiter mit:
einem Glasfaserkern zur Lichtwellenübertragung,
einem den Glasfaserkern umschließenden Glasfasermantel,
einer Einkopplungsstirnfläche des Glasfaserkerns zum Einkoppeln von Licht, das von der Lichtstrahlungsquelle emittiert wird, in den Glasfaserkern,
einer Auskopplungsstirnfläche des Glasfaserkerns zum Auskoppeln von Licht aus dem Glasfaserkern in den Mehrmoden-Lichtwellenleiter,
wobei die Einkopplungsstirnfläche des Glasfaserkerns zur Strahlungswinkelausweitung des eingekoppelten Lichtes sphärisch nach innen gekrümmt ist.

Bei einer bevorzugten Ausführungsform der erfindungsgemäßen Koppelglasfaser ist die Einkopplungsstirnfläche des Glasfaserkerns konkavförmig nach innen gekrümmt.

Bei dem Glasfaserkern handelt es sich vorzugsweise um einen Mehrmoden-Lichtwellenleiter mit einem Gradientenindexprofil.

Die Auskopplungsstirnfläche des Glasfaserkerns ist vorzugsweise planar.

Die konkavförmige Einkopplungsstirnfläche ist bei einer bevorzugten Ausführungsform rotationssymmetrisch zur Längsachse des Glasfaserkerns.

Bei einer weiteren Ausführungsform der erfindungsgemäßen Koppelglasfaser ist die konkavförmige Einkopplungsstirnfläche rotationssymmetrisch zu einer Achse, die in einem Neigungswinkel zu der Längsachse des Glasfaserkerns verläuft.

Dabei beträgt der Neigungswinkel vorzugsweise 45°.

Die Einkopplungsstirnfläche besitzt vorzugsweise eine Spiegelschicht zur Reflexion von Licht .

Hierdurch ist eine Einkopplung des Lichtes unter 90° zur Längsachse des Glasfaserkerns möglich.

Die Erfindung schafft ferner ein optoelektronisches Lichtsendebauelement für Mehrmoden-Lichtwellenleiter mit mindestens einer optischen Lichtstrahlungsquelle zur Erzeugung von Licht und
einer zugeordneten Koppelglasfaser zur optischen Kopplung der optischen Lichtstrahlungsquelle an den Mehrmoden-Lichtwellenleiter,
wobei die Koppelglasfaser einen Glasfaserkern mit einer der Lichtstrahlungsquelle zugewandten Einkopplungsstirnfläche zum Einkoppeln des erzeugten Lichtes in den Glasfaserkern aufweist,
und wobei die Einkopplungsstirnfläche des Glasfaserkerns zur Strahlungswinkelausweitung des eingekoppelten Lichtes sphärisch nach innen gekrümmt ist.

Bei einer bevorzugten Ausführungsform ist die Einkopplungsstirnfläche des Glasfaserkerns zur Strahlungsausweitung des eingekoppelten Lichtes konkav nach innen gekrümmt.

Bei der optischen Lichtstrahlungsquelle handelt es sich vorzugsweise um eine Laserlichtquelle.

Die Laserlichtquelle ist vorzugsweise eine Laserdiode.

Bei einer besonders bevorzugten Ausführungsform ist die Laserdiode eine VCSEL-Laserdiode.

Der Glasfaserkern weist bei einer besonders bevorzugten Ausführungsform einen Durchmesser von 62,5 µm auf.

Die numerische Apertur des Glasfaserkerns beträgt vorzugsweise 0,275.

Bei einer bevorzugten Ausführungsform weist die Einkopplungsstirnfläche eine konkavförmige Krümmung mit einem mittleren Radius von 0,3 mm auf.

Die Erfindung schafft ferner ein Verfahren zur Herstellung einer Koppelglasfaser mit den folgenden Schritten, nämlich Planieren beider Stirnflächen einer Rohglasfaser, die einen Glasfaserkern mit einem Gradientenindex-Materialprofil und einen den Glasfaserkern umschließenden Glasfasermantel aufweist,
Ätzen von mindestens einer der beiden Stirnflächen der Rohglasfaser mit einer Ätzflüssigkeit, deren Abtragungsrate entsprechend dem Gradientenindex zur Mitte des Glasfaserkerns hin zunimmt.

Dabei wird die Stirnfläche der Rohglasfaser vorzugsweise für eine vorbestimmte Zeit geätzt.

Bei einer bevorzugten Ausführungsform des erfindungsgemäßen Verfahrens ist die Abtragungsrate der Ätzflüssigkeit für den Glasfasermantel sehr niedrig.

Die Rohglasfaser wird beim Ätzen vorzugsweise in die Ätzflüssigkeit eingetaucht.

Bei der Ätzflüssigkeit handelt es sich vorzugsweise um HF.

Das Planieren der beiden Stirnflächen der Rohglasfaser erfolgt bei einer bevorzugten Ausführungsform des erfindungsgemäßen Herstellungsverfahrens durch Polieren.

Die Abtragungsrate der Ätzflüssigkeit beträgt bei einer besonders bevorzugten Ausführungsform des erfindungsgemäßen Verfahrens in der Mitte des Glasfaserkerns etwa 1,4 µm/min.

Die Ätzflüssigkeit weist vorzugsweise eine Konzentration von etwa 20% auf.

Bei einer bevorzugten Ausführungsform des erfindungsgemäßen Herstellungsverfahrens wird die Mitte des Glasfaserkerns an der Stirnfläche bis zu einer Ätztiefe von 1-4 µm geätzt.

Im weiteren werden bevorzugte Ausführungsformen der erfindungsgemäßen Koppelglasfaser zur optischen Kopplung einer Lichtstrahlungsquelle an einen Mehrmoden-Lichtwellenleiter sowie ein Verfahren zu deren Herstellung und ein optoelektronisches Lichtsendebauelement, das die erfindungsgemäße Koppelglasfaser enthält, unter Bezugnahme auf die beigefügten Figuren zur Erläuterung erfindungswesentlicher Merkmale beschrieben.

### Es zeigen:

Fig. 1 ein Diagramm zur Erläuterung der der Erfindung zugrundeliegenden Problematik;
Fig. 2 eine erste Ausführungsform der erfindungsgemäßen Koppelglasfaser;
Fig. 3 den Einsatz der erfindungsgemäßen Koppelglasfaser zur optischen Kopplung einer Lichtstrahlungsquelle an einen Mehrmoden-Lichtwellenleiter;
Fig. 4 eine zweite Ausführungsform der erfindungsgemäßen Koppelglasfaser;
Fig. 5 ein Diagramm zur Darstellung des Gradientenindexprofils einer erfindungsgemäßen Koppelglasfaser.

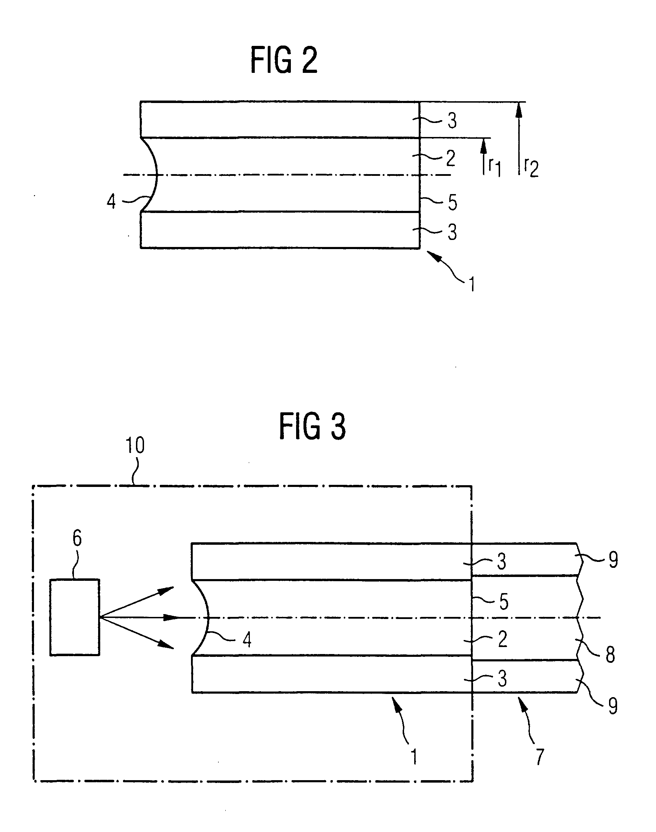

Fig. 2 zeigt eine erste Ausführungsform der erfindungsgemäßen Koppelglasfaser 1 zur optischen Kopplung einer Lichtstrahlungsquelle an einen Mehrmoden-Lichtwellenleiter.

Die Koppelglasfaser 1 weist einen Glasfaserkern 2 zur Lichtwellenübertragung auf. Der Glasfaserkern 2 wird von einem Glasfasermantel 3 umschlossen. Der Glasfaserkern 2 besitzt eine Einkopplungsstirnfläche 4 zum Einkoppeln von elektromagnetischen Wellen bzw. Licht. Das Licht wird dabei von einer nicht dargestellten Lichtstrahlungsquelle emittiert und über die Einkoppelstirnfläche 4 in den Glasfaserkern 2 eingekoppelt. Der Glasfaserkern 2 besitzt ferner eine Auskopplungsstirnfläche 5 zum Auskoppeln von Licht aus dem Glasfaserkern in einen Mehrmoden-Lichtwellenleiter.

Die Einkopplungsstirnfläche 4 des Glasfaserkerns 2 dient zur Strahlungswinkelausweitung des eingekoppelten Lichtes. Die Einkopplungsstirnfläche 4 ist dabei sphärisch nach innen gekrümmt. Bei der in Fig. 2 dargestellten bevorzugten Ausführungsform ist die Einkopplungsstirnfläche 4 im wesentlichen konkavförmig nach innen gekrümmt, wobei die konkavförmige Einkopplungsstirnfläche 4 rotationssymmetrisch zu der Längsachse des Glasfaserkerns 2 ist. Der Glasfaserkern 2 weist bei einer besonders bevorzugten Ausführungsform einen Durchmesser von 62,5 µm auf und besitzt eine numerische Apertur von 0,275. Die konkavförmige Einkopplungsstirnfläche 4 weist bei dieser besonders bevorzugten Ausführungsform einen mittleren Krümmungsradius von 0,3 mm auf. Durch die Krümmung der Einkopplungsstirnfläche 4 wird die optimale Einkopplung mit der größtmöglichen Ausleuchtung des Wellenleiterkerns erreicht. Hierdurch wird die Anregung einer höheren Zahl von Moden ermöglicht. Die konkavförmig ausgebildete Einkopplungsstirnfläche 4 der Kopplungsglasfaser 1 führt zu einer Veränderung der Strahlungsführung im Wellenleiter, ohne dass zusätzliche optische Bauelemente notwendig sind.

Fig. 3 zeigt eine Anordnung, bei der die in Fig. 2 dargestellte erste Ausführungsform der erfindungsgemäßen Koppelglasfaser zur optischen Kopplung einer Lichtstrahlungsquelle 6 an einen Mehrmoden-Lichtwellenleiter 7 eingesetzt wird. Die Auskopplungsstirnfläche 5 des Glasfaserkerns 2 liegt dabei vorzugsweise planar an dem Mehrmoden-Lichtwellenleiter 7 an, der einen Glasfaserkern 8 und einen diesen Glasfaserkern umschließenden Glasfasermantel 9 besitzt. Die optische Lichtstrahlungsquelle 6 ist eine Laserlichtquelle, die in der Regel durch eine Laserdiode gebildet wird. Bei der Lichtquelle 6 handelt es sich vorzugsweise um eine VCSEL-Laserdiode.

Die Koppelglasfaser 1 und die optische Lichtstrahlungsquelle 6 sind in einem optoelektronischen Lichtsendebauelement 10 integriert. Die Koppelglasfaser 1 dient dabei zur optischen Ankopplung der optischen Lichtstrahlungsquelle 6 an den externen Mehrmoden-Lichtwellenleiter 7. Die der Lichtstrahlungsquelle zugewandte Einkopplungsstirnfläche 4 des Glasfaserkerns 2 der Koppelglasfaser 1 dient zum Einkoppeln des durch die Lichtstrahlungsquelle 6 erzeugten Lichtes. Die Kopplungsglasfaser 1 stellt sicher, dass die von der Lichtstrahlungsquelle 6 abgegebene Leistung mit einem sehr hohen Wirkungsgrad in den Mehrmoden-Lichtwellenleiter 7 übertragen wird. Darüber hinaus stellt die Koppelglasfaser 1 sicher, dass den Laser-Sicherungsstandards genügt wird, d.h. die maximal zulässige Abstrahlleistung für alle Abstrahlungswinkel nicht überschritten wird.

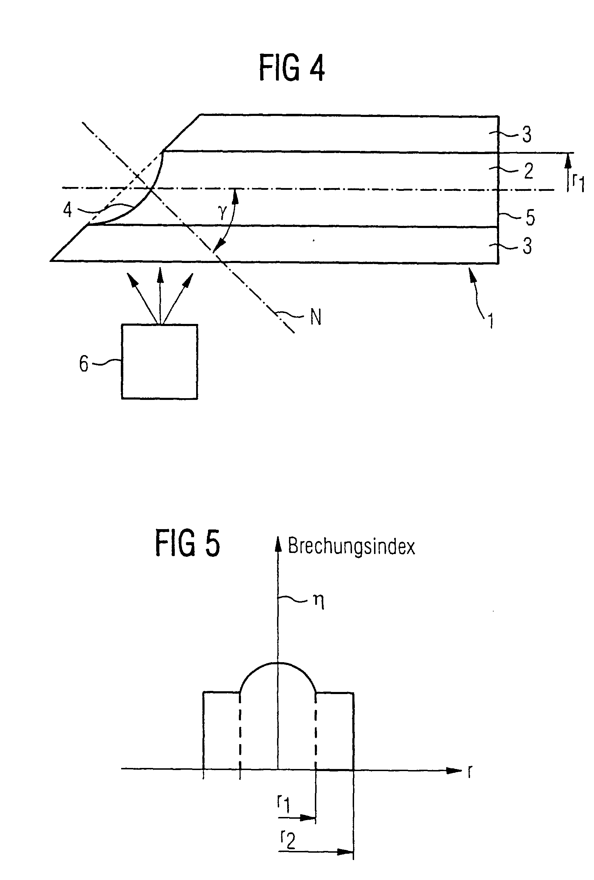

Fig. 4 zeigt eine weitere Ausführungsform der erfindungsgemäßen Koppelglasfaser 1. Bei dieser Ausführungsform ist die konkavförmig ausgebildete Einkopplungsstirnfläche 4 im wesentlichen rotationssymmetrisch zu einer Achse N angeordnet, die in einem Neigungswinkel γ zu der Längsachse des Glasfaserkerns 2 verläuft. Der Neigungswinkel γ beträgt bei einer bevorzugten Ausführungsform 45°. Die Einkopplungsstirnfläche 4 besitzt eine lichtreflektierende Schicht die eine Einkopplung des Lichtes unter einen Winkel von 90° zu der Längsachse der Koppelglasfaser ermöglicht.

Die in Fig. 4 gezeigte Ausführungsform der erfindungsgemäßen Koppelglasfaser 1 ermöglicht eine winklige Einkopplung von Licht in den Glasfaserkern 2. Hierbei kann die in Fig. 4 dargestellte Koppelglasfaser 1 zu einer 90°-Umlenkung von zugeführtem Licht eingesetzt werden. Dabei trifft das Licht in einem Winkel von 90° zu der Längsachse des Glasfaserkerns 2 auf die Einkoppelstirnfläche 4 des Glasfaserkerns auf, wobei die Einkoppelstirnfläche 4 wie ein konkavförmig ausgebildeter Spiegel wirkt und das auftreffende Licht in den Glasfaserkern 2 reflektiert. Dabei tritt das umzulenkende, von der Lichtstrahlungsquelle 6 erzeugte Licht vorzugsweise durch den Glasfasermantel 3 hindurch und trifft von innen auf die konkavförmige Stirnfläche 4 des Glasfaserkerns 2 auf. Dort wird das Licht reflektiert und in dem Glasfaserkern 2 zu der Auskoppelstirnfläche 5 übertragen.

Fig. 5 zeigt den Brechungsindexverlauf innerhalb einer erfindungsgemäßen Koppelglasfaser 1. Der Glasfaserkern 2 besitzt einen Durchmesser von 2 x rl, der vorzugsweise 62,5 µm beträgt. Die Brechzahl bzw. der Brechungsindex innerhalb des Glasfaserkerns weist ein parabelförmiges Profil auf. Dabei ist die Brechungszahl in der Mitte des Glasfaserkerns 2 am höchsten und fällt parabelförmig zum Rand des Glasfaserkerns 2 ab. Der Glasfasermantel 3 besitzt in der Regel eine geringere Brechungszahl, die im wesentlichen konstant ist.

Die numerische Apertur nA des Glasfaserkerns beträgt bei einer besonders bevorzugten Ausführungsform 0,275.

Es gilt nA = sin(αₘₐₓ),
wobei αₘₐₓ den maximalen Einkoppelwinkel bei der Einkopplung von Licht in den Glasfaserkern 2 darstellt.

Ein Vorteil der erfindungsgemäßen Koppelglasfaser 1 besteht darin, dass die Einkoppelstirnfläche 4 des Glasfaserkerns 2 mit hoher Genauigkeit und dennoch in einfacher Weise herstellbar ist.

Hierzu wird eine Rohglasfaser in einen kurzen Träger mit einer Innenbohrung eingeschoben und an beiden Seiten der Bohrung durch Brechen oder Schneiden gekürzt. Der derartig gekürzte Rohglasfaserstummel besitzt zwei Stirnflächen, die anschließend planiert werden. Daraufhin wird der Rohglasfaserstummel in eine Ätzflüssigkeit eingetaucht. Bei der Ätzflüssigkeit handelt es sich beispielsweise um Flußsäure HF. Das Eintauchen in die Ätzflüssigkeit erfolgt für eine vorbestimmte Zeit, wobei die Ätzflüssigkeit eine vorbestimmte Konzentration von beispielsweise 20% aufweist. Die Abtragungsrate der Ätzflüssigkeit ist für den Glasfaserkern 2 und den Glasfasermantel 3 unterschiedlich. Die Ätzflüssigkeit wird derart gewählt, dass die Abtragungsrate der Ätzflüssigkeit für den Glasfasermantel 3 erheblich unter der Abtragungsrate für den Glasfaserkern 2 liegt. Da der Glasfaserkern 2 ein Gradientenindex-Lichtwellenleiter mit einem parabelförmigen Brechungsindexverlauf ist, weist die chemische Zusammensetzung des Glasfaserkerns 2 ebenfalls einen Gradienten auf. Die Ätzflüssigkeit wird derart gewählt, dass die Abtragungsrate zur Mitte des Glasfaserkerns 2 hin zunimmt. Der Glasfaserkern 2 weist beispielsweise in seinem Mittelpunkt einen höheren Germaniumgehalt auf als an seinem Rand auf.

Bei einer bevorzugten Ausführungsform des erfindungsgemäßen Verfahrens beträgt die Abtragungsrate der Ätzflüssigkeit in der Mitte des Glasfaserkerns 2 etwa 1,4 µm/min. Die Koppelglasfaser 1 wird in die Ätzflüssigkeit über eine vorbestimmte Zeit gelegt, wobei der Glasfaserkern 2 an der Stirnfläche 4 vorzugsweise so lange geätzt wird, bis die Mitte des Glasfaserkerns bis zu einer Ätztiefe von etwa 1 bis 4 µm geätzt ist. Die Ätztiefe in der Mitte des Glasfaserkerns 2 beträgt bei einer besonders bevorzugten Ausführungsform 1,6 µm gegenüber der planaren Stirnfläche des Glasfasermantels. Diese Ätztiefe von 1,6 µm entspricht einer konkaven Krümmung mit einem mittleren Radius von 0,3 mm. Die erfindungsgemäße Koppelglasfaser 1 für ein optoelektronisches Bauelement 10 ist somit besonders einfach herstellbar.

Darüber hinaus ist die erfindungsgemäße Koppelglasfaser 1 in besonders einfacher Weise in ein optoelektronisches Lichtsendebauelement 10 einbaubar. Die Justierung und Ausrichtung der Lichtstrahlungsquelle 6 in bezug auf die erfindungsgemäße Koppelglasfaser 1 ist besonders einfach, da die Lichtabstrahlung der Lichtstrahlungsquelle 6 in der Längsachse des Glasfaserkerns 2 verläuft. Eine Justierung der Lichtquelle in bezug auf die Koppelglasfaser 1 entfällt daher.

### Bezugszeichenliste

- 1: Koppelglasfaser
- 2: Glasfaserkern
- 3: Glasfasermantel
- 4: Einkoppelstirnfläche
- 5: Auskoppelstirnfläche
- 6: Lichtstrahlungsquelle
- 7: Mehrmoden-Lichtwellenleiter
- 8: Glasfaserkern des Mehrmoden-Lichtwellenleiters
- 9: Glasfasermantel des Mehrmoden-Lichtwellenleiters
- 10: Optoelektronisches Lichtsendebauelement

## Patentansprüche

1. Koppelglasfaser zur optischen Kopplung einer Lichtstrahlungsquelle (6) an einen Mehrmoden-Lichtwellenleiter (7) mit:
einem Glasfaserkern (2) zur Lichtwellenübertragung;
einem den Glasfaserkern (2) umschließenden Glasfasermantel (3);
einer Einkopplungsstirnfläche (4) des Glasfaserkerns (2) zum Einkoppeln von Licht, das von der Lichtstrahlungsquelle (6) emittiert wird, in den Glasfaserkern (2);
einer Auskopplungsstirnfläche (5) des Glasfaserkerns (2) zum Auskoppeln von Licht aus dem Glasfaserkern (2) in den Mehrmoden-Lichtwellenleiter (7),
wobei die Einkopplungsstirnfläche (4) des Glasfaserkerns zur Strahlungswinkelausweitung des eingekoppelten Lichts konkavförmig nach innen gekrümmt ist.

2. Koppelglasfaser nach Anspruch 1,
**dadurch gekennzeichnet,**
**dass** die Einkopplungsstirnfläche (4) spährisch nach innen gekrümmt ist.

3. Koppelglasfaser nach einem der vorangehenden Ansprüche,
**dadurch gekennzeichnet,**
**dass** der Glasfaserkern (2) ein Mehrmoden-Lichtwellenleiter mit einem Gradientenindexprofil ist.

4. Koppelglasfaser nach einem der vorangehenden Ansprüche,
**dadurch gekennzeichnet,**
**dass** die Auskopplungsstirnfläche (5) des Glasfaserkerns (2) planar ist.

5. Koppelglasfaser nach einem der vorangehenden Ansprüche,
**dadurch gekennzeichnet,**
**dass** die konkavförmige Einkopplungsstirnfläche (4) rotationssymmetrisch zu der Längsachse des Glasfaserkerns (2) ist.

6. Koppelglasfaser nach einem der vorangehenden Ansprüche 1 bis 4,
**dadurch gekennzeichnet,**
**dass** die konkavförmige Einkopplungsstirnfläche (4) rotationssymmetrisch zu einer Achse N ist, die in einem Neigungswinkel (γ) zu der Längsachse des Glasfaserkerns (2) verläuft.

7. Koppelglasfaser nach Anspruch 6,
**dadurch gekennzeichnet,**
**dass** die Einkopplungsfläche (4) eine reflektierende Oberfläche und einen Neigungswinkel von 45° aufweist.

8. Optoelektronisches Lichtsendebauelement (10) für Mehrmoden-Lichtwellenleiter mit:
mindestens einer optischen Lichtstrahlungsquelle (6) zur Erzeugung von Licht und einer zugeordneten Koppelglasfaser (1) zur optischen Kopplung der optischen Lichtstrahlungsquelle (6) an den Mehrmoden-Lichtwellenleiter (7),
wobei die Koppelglasfaser (1) einen Glasfaserkern (2) mit einer der Lichtstrahlungsquelle (6) zugewandten Einkopplungsstirnfläche (4) zum Einkoppeln des erzeugten Lichts in den Glasfaserkern (2) aufweist,
wobei die Einkopplungsstirnfläche (4) des Glasfaserkerns (2) zur Strahlungswinkelausweitung des eingekoppelten Lichts konkavförmig nach innen gekrümmt ist.

9. Optoelektronisches Lichtsendebauelement nach Anspruch 8,
**dadurch gekennzeichnet,**
**dass** die Einkopplungsstirnfläche (4) des Glasfaserkerns (2) sphärisch nach innen gekrümmt ist.

10. Optoelektronisches Lichtsendebauelement nach einem der vorangehenden Ansprüche 8 oder 9,
**dadurch gekennzeichnet,**
**dass** die optische Lichtstrahlungsquelle (6) eine Laserlichtquelle ist.

11. Optoelektronisches Lichtsendebauelement Anspruch 10,
**dadurch gekennzeichnet,**
**dass** die Laserlichtquelle eine Laserdiode ist.

12. Optoelektronisches Lichtsendebauelement nach Anspruch 11,
**dadurch gekennzeichnet,**
**dass** die Laserdiode eine VCSEL-Laserdiode ist.

13. Optoelektronisches Lichtsendebauelement nach einem der vorangehenden Ansprüche,
**dadurch gekennzeichnet,**
**dass** der Glasfaserkern (2) eine planare Auskopplungsstirnfläche (5) zum Auskoppeln des Lichtes in den Mehrmoden-Lichtwellenleiter (7) aufweist.

14. Optoelektronisches Lichtsendebauelement nach einem der vorangehenden Ansprüche,
**dadurch gekennzeichnet,**
**dass** der Glasfaserkern (2) ein Mehrmoden-Lichtwellenleiter mit Gradientenindexprofil ist.

15. Optoelektronisches Lichtsendebauelement nach einem der
vorangehenden Ansprüche,
**dadurch gekennzeichnet,**
**dass** der Glasfaserkern (2) einen Durchmesser von 62,5 µm aufweist.

16. Optoelektronisches Lichtsendebauelement nach einem der vorangehenden Ansprüche,
**dadurch gekennzeichnet,**
**dass** die numerische Apertur des Glasfaserkerns 0,275 beträgt.

17. Optoelektronisches Lichtsendebauelement nach einem der vorangehenden Ansprüche,
**dadurch gekennzeichnet,**
**dass** die Einkopplungsstirnfläche (4) eine konkavförmige Krümmung mit einem mittleren Radius von 0,3 mm aufweist.

18. Verfahren zur Herstellung einer Koppelglasfaser (1) mit den folgenden Schritten:
(a) Planieren beider Stirnflächen einer Rohglasfaser, die einen Glasfaserkern (2) mit einem Gradientenindex-Materialprofil und einen den Glasfaserkern (2) umschließenden Glasfasermantel (3) aufweist;
(b) Ätzen von mindestens einer der beiden Stirnflächen der Rohglasfaser in einer Ätzflüssigkeit, deren Abtragungsrate entsprechend dem Gradientenindex zur Mitte des Glasfaserkerns (2) hin zunimmt.

19. Verfahren nach Anspruch 18, bei dem die Stirnfläche der Rohglasfaser für eine vorbestimmte Zeit geätzt wird.

20. Verfahren nach einem der vorangehenden Ansprüche, bei dem die Abtragungsrate der Ätzflüssigkeit für den Glasfasermantel (3) niedrig ist.

21. Verfahren nach einem der vorangehenden Ansprüche, bei dem die Rohglasfaser zum Ätzen in die Ätzflüssigkeit völlig eingetaucht wird.

22. Verfahren nach einem der vorangehenden Ansprüche, bei dem die Ätzflüssigkeit Flußsäure HF ist.

23. Verfahren nach einem der vorangehenden Ansprüche, bei dem das Planieren der Stirnflächen der Rohglasfaser durch Polieren erfolgt.

24. Verfahren nach einem der vorangehenden Ansprüche, bei dem die Abtragungsrate der Ätzflüssigkeit in der Mitte des Glasfaserkerns (2) etwa 1,4 µm/min beträgt.

25. Verfahren nach einem der vorangehenden Ansprüche, bei dem die Ätzflüssigkeit eine Säurekonzentration von etwa 20% aufweist.

26. Verfahren nach einem der vorangehenden Ansprüche, bei dem die Mitte des Glasfaserkerns (2) an der Stirnfläche (4) bis zu einer Ätztiefe von 1 bis 4 µm geätzt wird.
